# EUROPÄISCHE PATENTSCHRIFT

(11) **EP 3 310 510 B1**
(45) Veröffentlichungstag und Bekanntmachung des Hinweises auf die Patenterteilung: **01.11.2023**
(21) Anmeldenummer: 16724417.7
(22) Anmeldetag: 23.05.2016
(51) Int. Cl.: B22F 12/46, B22F 10/28, B29C 64/393, B33Y 30/00, B33Y 50/02, G01K 11/125, B22F 10/32, B22F 10/38, B22F 12/44, B22F 12/90

(54) **VORRICHTUNG ZUR GENERATIVEN HERSTELLUNG MIT EINER MESSEINRICHTUNG**
APPARATUS FOR ADDITIVE MANUFACTURING HAVING A MEASURING DEVICE
DISPOSITIF DE FABRICATION ADDITIVE AVEC INSTRUMENT DE MESURE

(30) Priorität: 19.06.2015 DE 102015007790
(43) Veröffentlichungstag der Anmeldung: 25.04.2018
(73) Patentinhaber: Airbus Defence and Space GmbH, 82024 Taufkirchen (DE)
(72) Erfinder: ENGEL, Franz, 81539 München (DE); NICK, Andreas, 81539 München (DE); REHM, Wolfgang, 88138 Hergensweiler (DE); WEIMER, Christian, 81539 München (DE)
(74) Vertreter: Isarpatent
(86) Internationale Anmeldenummer: PCT/EP2016/061565
(87) Internationale Veröffentlichungsnummer: WO 2016/202530

(56) Entgegenhaltungen:
- WO-A1-2014/179345
- WO-A2-2015/040433
- US-A- 5 427 733
- US-A1- 2011 039 016
- US-A1- 2013 193 620
- US-B1- 6 751 516

## Beschreibung

Die Erfindung betrifft eine Vorrichtung zur schichtweise-additiven Herstellung eines komplexen dreidimensionalen Bauteils, mit einer Messeinrichtung zur kontinuierlichen Überwachung von Qualitätskennzahlen, insbesondere der Temperatur und/oder einer chemischen Zusammensetzung der Schutzgasatmosphäre, während der Herstellung des Bauteils, wobei die Messeinrichtung und ein Bett mit einem Materialpulver zumindest bereichsweise von einer mit einer Schutzgasatmosphäre befüllten Bearbeitungszelle umgeben sind und das Materialpulver einer obersten Schicht mittels mindestens eines Lasers in einer Schmelzzone örtlich begrenzt aufschmelzbar ist.

Aus dem Stand der Technik ist das s. g. "Additive Layer Manufacturing = ALM-Verfahren" bekannt, bei dem ein Laser gezielt und lokal ein Materialpulver in einem planen Bett kurzzeitig aufschmilzt. Anschließend verfestigt bzw. erstarrt das punktuell aufgeschmolzene Materialpulver wieder, so dass sich durch eine Vielzahl von übereinander geschichteten Pulverschichten, die jeweils eine zweidimensionale verfestigte Geometrie des Materialpulvers enthalten, komplexe dreidimensionale Bauteile herstellen lassen. Nach jedem Aufschmelz- und Verfestigungsvorgang ist es erforderlich, mittels eines Rakels bzw. eines Schiebers eine neue Pulverschicht gleichbleibender Materialstärke über die jeweils darunter liegende Schicht mit dem lokal verfestigten Pulvermaterial auszubreiten. Eine Dicke der aufgetragenen Pulverschichten liegt in einem Bereich von bis zu 100 µm. Der ganze Vorgang wiederholt sich solange, bis alle das dreidimensionale Bauteil bildenden Pulverschichten bearbeitet bzw. partiell mittels des Lasers aufgeschmolzen sind. Beim Entfernen des nicht durch den Schmelz- und Erstarrungsprozess fest gebundenen Materialpulvers bleibt das fertige dreidimensionale Bauteil zurück. Bei dem Materialpulver kann es sich z. B. um ein feinkörniges, staubähnliches Metallpulver, ein thermoplastisches Kunststoffpulver, ein duroplastisches Kunststoffpulver oder dergleichen handeln.

Die Qualität und Güte der mittels des ALM-Verfahrens hergestellten Bauteile wird von zahlreichen Faktoren beeinflusst. Wichtige Einflussfaktoren für die Prozessqualität sind z. B. die Temperatur im Schmelzpunkt, die vorrangig von der Laserleistung abhängt, sowie die Homogenität des jeweils als Ausgangsmaterial eingesetzten Metall- oder Kunststoffpulvers. Darüber hinaus muss der Prozess zur Vermeidung von Oxidation grundsätzlich unter einer inerten Schutzgasatmosphäre ablaufen.

Weiterhin ist es bekannt, dass für den ALM-Prozess eingesetzte Maschinen den Temperatureintrag in das Materialpulver auf indirekte Weise mit Hilfe der Laserleistung erfassen. Darüber hinaus wird die chemische Zusammensetzung der Schutzgasatmosphäre innerhalb der Vorrichtung - wenn überhaupt - lediglich punktuell erfasst. Infolgedessen kann es zu einer zu hohen Temperatur am Schmelzpunkt kommen. Weiterhin ist es möglich, dass unbemerkt Sauerstoff in die Schutzgasatmosphäre eintritt bzw. eine zulässige Restsauerstoffkonzentration überschritten wird.

Die US 5 427 733 A offenbart eine Laser-Sinter-Vorrichtung, bei der ein Materialbett in einer Schutzgasatmosphäre angeordnet ist, mit einem Laser und einem mittels eines Führungssystems positionierbaren optischen Detektor.

Eine Aufgabe der Erfindung ist es daher, eine Vorrichtung zur Durchführung eines ALM-Prozesses anzugeben, bei dem insbesondere eine Temperaturerhöhung im Schmelzpunkt vermieden und die Sauerstoffkonzentration im Bereich des Schmelzpunktes überwacht wird.

Diese Aufgabe wird jeweils durch eine Vorrichtung mit den Merkmalen des Anspruchs 1 und durch eine Vorrichtung mit den Merkmalen des Anspruchs 2 gelöst. Erfindungsgemäß weist die Messeinrichtung den mindestens einen Laser und mindestens einen optischen Sensor zur vorrangigen Erfassung der Qualitätskennzahlen im Bereich der Schmelzzone, insbesondere mittels einer Raman-Spektroskopie, auf.

Hierdurch lassen sich Verfahrensfehler, wie zum Beispiel eine Oxidation des Bauteils oder Spritzer aus aufgeschmolzenem Materialpulver, bereits frühzeitig während des laufenden ALM-Prozesses mit hoher Ortsauflösung erkennen und kurzfristig durch eine geeignete Anpassung von Prozessparametern für die Zukunft abstellen. Bevorzugt wird mittels des mindestens einen Sensors die s. g. Rotations-Raman-Streuung erfasst. Aus der Vermessung des Raman-Spektrums ergibt sich beispielsweise, ob das Aufschmelzen des Materialpulvers stabil, also im Rahmen von vordefinierten Toleranzen erfolgt. Aufgrund der Größe der s. g. Rotations-Ramanlinie ist zudem die Temperatur im Bereich der Schmelzzone bestimmbar. Das Raman-Spektrum kann darüber hinaus zur Bestimmung der Energie bzw. der Temperatur in der Schmelzzone herangezogen werden.

Der Begriff "Qualitätskennzahlen" definiert im Kontext dieser Beschreibung unter anderem ein Maß für die Temperatur im Bereich der Schmelzzone, das Vorhandensein unerwünschter Gase, eine etwaige, unerwünschte Oxidation des Bauteils, einen Kristallinitätsgrad bzw. einen Kristallisierungsgrad des aufgeschmolzenen Materialpulvers in der Schmelzzone, die Stabilität des Schmelzvorgangs, etwaige Materialspritzer sowie im Fall eines duroplastischen oder thermoplastischen Materialpulvers, insbesondere dessen Vernetzungsgrad und den Einfluss einer Faserarmierung. Die Messeinrichtung gestattet unter anderem das Erfassen der räumlichen Position der Schmelzzone in Relation zu dem im ALM-Prozess herzustellenden Bauteil, der Intensität der vom Laser abgegebenen Laserstrahlung in der Schmelzzone, der Ausdehnung und der Intensitätsverteilung der Schmelzzone, des Vorhandenseins von Sauerstoff in der Schutzgasatmosphäre, der Rotations-Raman-Streuung zur Temperaturmessung in der Schmelzzone sowie des Spektrums der Schmelzzone.

Im Fall einer nicht von der Erfindung umfassten Ausführungsform ist der optische Sensor mittels eines Führungssystems der Schmelzzone nachführbar. Hierdurch ist eine punktgenaue Messung in der Schmelzzone möglich.

Bei einer nicht von der Erfindung umfassten Ausführungsform ist mittels des optischen Sensors ein Arbeitsbereich des Lasers erfassbar. Hierdurch ist eine flächenhafte Messung realisierbar. Unter dem Begriff "Arbeitsbereich" ist derjenige Bereich des Bettes mit dem Materialpulver zu verstehen, der durch eine entsprechende Positionierung des Lasers mittels des Führungssystems mit der Laserstrahlung bestrahlbar ist.

Nach Maßgabe einer weiteren nicht von der Erfindung umfassten Ausführungsform ist mittels des optischen Sensors mindestens ein vordefinierter und ortsfester Bereich erfassbar. Hierdurch ergibt sich ein vereinfachter konstruktiver Aufbau der Messeinrichtung, die in dieser Konstellation an mindestens einem vordefinierten Bereich des Bauteils eine stichprobenartige Messung ermöglicht.

Nach Maßgabe einer Weiterbildung ist dem Laser und/oder dem Sensor jeweils eine Optik zugeordnet. Hierdurch ist eine gezielte und umfassende Strahlbeeinflussung der vom Laser emittierten Laserstrahlung möglich. Diese Optik kann z. B. Linsen, insbesondere Konvex- oder Konkavlinsen, Filter, Polarisatoren, Spiegel oder dergleichen umfassen.

Erfindungsgemäß ist der optische Sensor in ein Führungssystem des mindestens einen Lasers zur räumlichen Positionierung des Lasers in Bezug zum Bauteil integriert. Hierdurch ergibt sich eine beträchtliche Vereinfachung des konstruktiven Aufbaus der Vorrichtung, da zum Verfahren der Messeinrichtung das Führungssystem des (Schmelz-)Lasers mitbenutzt werden kann.

Nach einer ersten erfindungsgemäßen Alternative ist von dem mindestens einen Laser emittierte Laserstrahlung mittels eines halbdurchlässigen Spiegels auf das Materialpulver der obersten Schicht des Bettes umlenkbar und eine vom Materialpulver gestreute Messstrahlung ist nach dem ablenkungsfreien Durchlaufen des Spiegels dem mindestens einen optischen Sensor zuführbar. Hierdurch ist ein platzsparender Aufbau der Vorrichtung gegeben.

Nach einer zweiten erfindungsgemäßen Alternative durchläuft von dem mindestens einen Laser emittierte Laserstrahlung einen halbdurchlässigen Spiegel ablenkungsfrei und eine vom Materialpulver der obersten Schicht des Bettes gestreute Messstrahlung ist nach einer Umlenkung mittels des Spiegels dem mindestens einen optischen Sensor zuführbar. Infolgedessen entfällt die Notwendigkeit einer Ablenkung der vom Laser emittierten, besonders starken Laserstrahlung.

Nach Maßgabe einer weiteren nicht von der Erfindung umfassten Ausführungsform sind der mindestens eine optische Sensor und eine diesem jeweils zugeordnete Optik koaxial zu dem mindestens einen Laser angeordnet. Infolgedessen ist ein räumlich noch kompakterer Aufbau der Vorrichtung realisierbar.

Vorzugsweise ist der Messeinrichtung eine elektronische Auswerteeinheit zugeordnet. Hierdurch ist eine umfassende numerische Auswertung und Analyse der von dem mindestens einen Sensor gelieferten Messwerte für eine komplexe Qualitätsanalyse in einem zu überwachenden, laufenden ALM-Prozess möglich, die zu diesem Zweck bevorzugt in Echtzeit bzw. "Online" erfolgt.

Bevorzugt ist mittels des mindestens einen optischen Sensors eine räumliche Lage der Schmelzzone in Relation zu dem Bauteil und/oder eine Temperatur im Bereich der Schmelzzone berührungslos erfassbar. Hierdurch lassen sich die Messwerte definierten Koordinaten des Bauteils zuordnen, so dass sich Bereiche des Bauteils, in denen unzulässige Abweichungen der Qualitätskennzahlen ermittelt wurden, jederzeit weiter untersuchen lassen.

Vorzugsweise ist die Temperatur im Bereich der Schmelzzone durch die Erfassung einer Infrarot-Strahlungsmenge oder einer Rotations-Raman-Strahlung mittels des mindestens einen Sensors erfassbar. Hierdurch ist es möglich, die lokale Temperatur im Bereich der Schmelzzone mit hoher Genauigkeit zu erfassen. Hier wird in der Schmelzzone die Planck'sche Wärmestrahlung innerhalb des infraroten Spektrums mittels des in diesem Fall z. B. als ein Bolometer oder als ein Pyrometer ausgebildeten optischen Sensors erfasst und hieraus mit Hilfe der Auswerteeinheit die Temperatur der Schmelzzone errechnet. Alternativ kann mittels des mindestens einen Sensors die Raman-Streuung innerhalb der Schutzgasatmosphäre erfasst werden. Je nach der Temperatur des Gases in einem Messpunkt, der durch die vom Laser emittierte Laserstrahlung definiert ist, ist die Rotations-Raman-Strahlung unterschiedlich breit und intensiv. Mittels eines schmalbandigen optischen Filters, der die ursprüngliche Laserstrahlung herausfiltert, kann die verbleibende Strahlung des Spektrums mittels des optischen Sensors gemessen und somit die Temperatur ermittelt werden.

Im Fall einer weiteren Ausgestaltung sind mittels mindestens eines Sensors und eines Messlasers Sauerstoff und/oder andere Gase innerhalb der Schutzgasatmosphäre durch eine Infrarot-Linien-Absorption oder eine Raman-Verschiebung erfassbar. Hierdurch lassen sich unerwünschte Gase in der Schutzgasatmosphäre verlässlich detektieren. Zu diesem Zweck wird z. B. ein zusätzlicher, dann als Messlaser fungierender Laser, der auf eine Sauerstofflinie im optischen Spektrum abgestimmt ist, durch die Bearbeitungszelle geleitet. An einem Ende des Weges der vom Messlaser emittierten Laserstrahlung befindet sich ein entsprechend ausgestalteter optischer Sensor, der die beim Vorhandensein von Sauerstoffmolekülen erfolgende Absorption der Laserstrahlung erfasst.

Bevorzugt sind mittels des mindestens einen Sensors und des mindestens einen Lasers Sauerstoff und/oder andere Gase in der Schutzgasatmosphäre anhand einer Farbe und/oder einer Intensität der am Materialpulver gestreuten Messstrahlung erfassbar. Hierdurch lassen sich unerwünschte Gase bzw. die Schutzgasatmosphäre "vergiftende" Gase bzw. Gasmoleküle zuverlässig detektieren. In dieser Konstellation dient der Laser bzw. der Schmelzlaser zugleich als Messlaser. Beim Auftreten von Sauerstoff bzw. Sauerstoffmolekülen in der Schutzgasatmosphäre entsteht im optischen Spektrum eine Rotations-Vibrations-Ramanlinie des Q-Astes, die mit einem schmalbandigen optischen Filter und einem entsprechend ausgebildeten optischen Sensor erfassbar ist. In diesem Fall kann z. B. mittels der Auswerteeinheit ein Alarmsignal ausgegeben werden.

Nach Maßgabe einer vorteilhaften Ausgestaltung sind mittels der Auswerteeinheit die Qualitätskennzahlen, insbesondere eine Oxidation des Bauteils und ein Kristallinitätsgrad in der Schmelzzone, ermittelbar. Hierdurch kann die Güte des durch schichtweise erfolgendes Aufschmelzen und Erstarren des Materialpulvers gebildeten Bauteils kontinuierlich und mit hoher Genauigkeit überwacht werden. Im Fall einer signifikanten Verschlechterung der Qualitätskennzahlen, was auf qualitätsrelevante Fehler im ALM-Prozess hindeutet, kann der Herstellungsvorgang nachgeregelt und auch vollständig unterbrochen werden.

In der Zeichnung zeigt:
- **Fig. 1**: eine Darstellung eines nicht von der Erfindung umfassten ersten Ausführungsbeispiels der Vorrichtung,
- **Fig. 2**: eine Darstellung eines nicht von der Erfindung umfassten zweiten Ausführungsbeispiels der Vorrichtung,
- **Fig. 3**: eine Darstellung eines nicht von der Erfindung umfassten dritten Ausführungsbeispiels der Vorrichtung,
- **Fig. 4**: eine Darstellung eines vierten erfindungsgemäßen Ausführungsbeispiels der Vorrichtung,
- **Fig. 5**: eine Darstellung eines fünften erfindungsgemäßen Ausführungsform der Vorrichtung
- **Fig. 6**: eine Darstellung eines nicht von der Erfindung umfassten sechsten Ausführungsbeispiels der Vorrichtung.

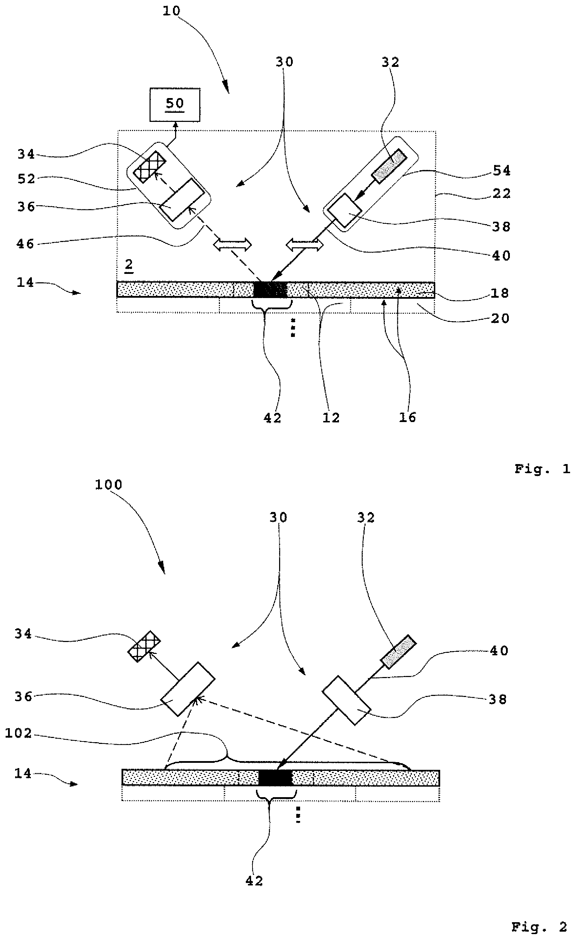

**Fig. 1** zeigt eine Prinzipskizze eines ersten Ausführungsbeispiels einer Vorrichtung. Eine Vorrichtung 10 zum Herstellen eines komplexen dreidimensionalen Bauteils 12 im s. g. ALM-Verfahren umfasst unter anderem ein planes Bett 14, das mit einer Vielzahl von dünnen Schichten aus einem Materialpulver 16 gebildet ist, von denen hier lediglich zwei Schichten 18, 20 eingezeichnet sind. Bei dem Materialpulver 16 kann es sich um ein thermoplastisches Materialpulver, ein duroplastisches Materialpulver oder ein metallisches Materialpulver handeln. Weiterhin umfasst die Vorrichtung 10 eine Bearbeitungszelle 22, die mit einer inerten Schutzgasatmosphäre 24 angefüllt ist. Darüber hinaus weist die Vorrichtung 10 eine Messeinrichtung 30 auf, die mit einem Laser 32 und einem optischen Sensor 34 gebildet ist. Sowohl dem Laser 32 als auch dem Sensor 34 kann eine optionale Optik 36, 38 vorgeschaltet sein. Mittels einer vom Laser 32 emittierten monochromen Laserstrahlung 40 ist eine Schmelzzone 42 in der obersten Schicht 18 des Bettes 14 temporär aufschmelzbar. Nach dem Aufschmelzvorgang erhärtet bzw. erstarrt die Schmelzzone 42 in der Regel selbsttätig und bildet eine verfestigte bzw. harte Schicht bzw. Lage des im ALM-Prozess herzustellenden Bauteils 12. Von der Schmelzzone 42 wird eine Messstrahlung 46 zurück gestreut bzw. zurückgeworfen, die von dem Sensor 34 zur Ermittlung der eingangs erwähnten Qualitätskennzahlen des ALM-Prozesses erfasst wird.

Die Ermittlung der Qualitätskennzahlen erfolgt unter anderem mittels einer Raman-Spektroskopie der gestreuten Messstrahlung 46 mit Hilfe des Sensors 34, kann aber auch mit Hilfe anderer optischer Messverfahren geschehen.

Die Auswertung der von dem optischen Sensor 34 gelieferten Messwerte erfolgt bevorzugt mittels einer digitalen elektronischen Auswerteeinheit 50 in Echtzeit. Im Fall des hier illustrierten ersten Ausführungsbeispiels der Vorrichtung sind der optische Sensor 34 einschließlich der Optik 36 mittels eines Führungssystems 52 frei in Relation zum Bett 14 positionierbar und hierdurch dem gleichfalls mittels eines Führungssystems 54 im Raum frei positionierbaren Laser 32 und dessen Optik 38 - wie mit den beiden weißen Doppelpfeilen angedeutet - nachführbar, so dass die Qualitätskennzahlen vorzugsweise stets im Bereich der Schmelzzone 42 ermittelt werden. Darüber hinaus kann mittels der Auswerteeinheit 50 gegebenenfalls jeder Koordinate des Bauteils 12 mindestens eine Qualitätskennzahl zur Erleichterung der Fehlersuche zugewiesen werden, wobei das räumliche Auflösungsvermögen im Wesentlichen nur durch die Positioniergenauigkeit der Führungssysteme 52, 54 limitiert ist. Die Steuerung bzw. Regelung der beiden Führungssysteme 52, 54 sowie aller weiteren, regelungsbedürftigen Komponenten der Vorrichtung 10 erfolgt vorzugsweise gleichfalls mittels der Auswerteeinheit 50.

Eine berührungslose optische Temperaturmessung kann z. B. durch eine Erfassung der Infrarot-Strahlungsmenge in der Schmelzzone 42 mittels des Sensors 34 erfolgen. Hierbei wird im Schmelzpunkt des Laserstrahls die Planck'sche Wärmestrahlung optisch erfasst und mittels des als Bolometer oder Pyrometer ausgebildeten Sensors 34 die Strahlungsmenge innerhalb eines infraroten Spektrums erfasst und hieraus die Temperatur mittels der Auswerteeinheit 50 errechnet.

Darüber hinaus ist eine berührungslose optische Temperaturmessung durch die Messung der Rotations-Raman-Streuung möglich. Hierzu wird die Raman-Streuung der Laserstrahlung 40 in der Schutzgasatmosphäre 24 im Bereich der Schmelzzone 42 gemessen und mittels der Auswerteeinheit 50 ausgewertet. Je nach der Temperatur der Schutzgasatmosphäre 24 ist die Rotations-Raman-Streuung unterschiedlich breit und intensiv. In einer solchen Konstellation ist die dem optischen Sensor 34 vorgelagerte Optik 36 als ein schmalbandiger optischer Filter ausgeführt, der die ursprüngliche Laserstrahlung 40 herausfiltert, so dass die verbleibende Strahlung des Spektrums mittels des Sensors 34 gemessen und die Temperatur mit Hilfe der Auswerteeinheit 50 berechnet werden kann.

Weiterhin kann mittels des Sensors 34 die Erkennung von Sauerstoffanteilen in der Schutzgasatmosphäre 24 mittels einer Raman-Verschiebung erfolgen. Zu diesem Zweck wird der (Schmelz-)Laser 32 selbst als ein Messlaser mitverwendet. Beim Auftreten von Sauerstoffmolekülen in der Schutzgasatmosphäre 24 wird im optischen Spektrum eine Rotations-Vibrations-Ramanlinie des Q-Astes auftauchen, die wiederum mit einem schmalbandigen optischen Filter erfasst werden kann, so dass von der Auswerteeinheit 50 eine Warnmeldung erfolgen und/oder der ALM-Prozess selbsttätig von der Auswerteeinheit 50 unterbrochen werden kann.

Die **Fig. 2** zeigt ein weiteres Ausführungsbeispiel einer Vorrichtung. Eine Vorrichtung 100 weist im Wesentlichen denselben konstruktiven Aufbau wie das erste Ausführungsbeispiel der Vorrichtung nach Maßgabe von Fig. 1 auf. Der Laser 32 mit der vorgelagerten Optik 38 sowie der Sensor 34 mit der vorgeschalteten Optik 36 bilden wiederum die Messeinrichtung 30. Im Unterschied zu dem Ausführungsbeispiel von Fig. 1 ist jedoch mittels des Sensors 34 und der diesem zugeordneten Optik 36 ein Arbeitsbereich 102 des Lasers 32 und der Optik 38 vollständig erfassbar, so dass für den Sensor 34 und dessen Optik 36 kein Führungssystem zur Positionierung in Relation zum Bett 14 notwendig ist. Die Schmelzzone 42 liegt dabei stets innerhalb des Arbeitsbereichs 102. Der Arbeitsbereich 102 ist hierbei diejenige Fläche des Bettes 14, die von der Laserstrahlung 40 des Lasers 32 erfassbar ist.

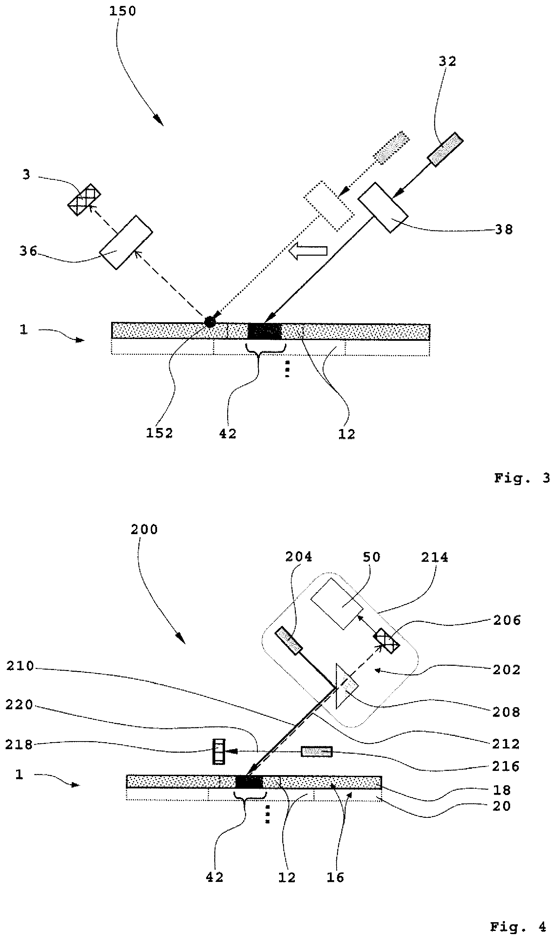

Die **Fig. 3** illustriert ein weiteres Ausführungsbeispiel einer Vorrichtung. Eine Vorrichtung 150 umfasst wiederum im Wesentlichen die gleichen konstruktiven Elemente, wie das Ausführungsbeispiel von Fig. 2. Im Unterschied zu dieser ist jedoch mittels des Sensors 34 und der diesem zugeordneten Optik 36 lediglich ein in Bezug zum Bett 14 ortsfester, vordefinierter Bereich 152 erfassbar, so dass lediglich eine stichprobenartige, punktuelle Messung möglich ist. Die Schmelzzone 42 kann in Abhängigkeit von der jeweiligen Position des Lasers 32 und dessen Optik 38 in Bezug zu dem Bett 14 deckungsgleich mit dem vordefinierten Bereich 152 sein oder außerhalb von diesem liegen. Im gezeigten Ausführungsbeispiel von Fig. 3 gelangt die Schmelzzone 42 erst in den vordefinierten Bereich 152, wenn der Laser 32 zusammen mit der Optik - wie mit dem weißen Pfeil angedeutet - die mit punktierten Linien angedeutete Position in Relation zum Bett 14 eingenommen hat.

Im Allgemeinen ist eine Vielzahl von Bereichen 152 notwendig, die bevorzugt in denjenigen Abschnitten des Bauteils 12 lokalisiert sind, in denen die Qualitätskennzahlen häufiger außerhalb vorgegebener Spezifikationen bzw. Grenzwerte liegen.

Die **Fig. 4** veranschaulicht eine viertes, erfindungsgemäßes Ausführungsbeispiel einer Vorrichtung. Eine Vorrichtung 200 umfasst unter anderem eine Messeinrichtung 202, die mit einem Laser 204, einem optischen Sensor 206 sowie einem halbdurchlässigen Spiegel 208 aufgebaut ist. Der Laser 204 dient neben seiner primären Funktion als (Schmelz-)Laser 204 zum Aufschmelzen des Materialpulvers 16 der obersten der beiden Schichten 18, 20 im Bereich der Schmelzzone 42 des Bettes 14 zugleich als ein Messlaser, um im Zusammenwirken mit dem optischen Sensor 206 die Qualitätskennzahlen im Bereich der Schmelzzone 42 zu überwachen. Mittels des halbdurchlässigen Spiegels 208 wird zu diesem Zweck eine vom Laser 204 erzeugte Laserstrahlung 210 hier exemplarisch um 90° abgelenkt und in die Schmelzzone 42 des Bettes 14 eingekoppelt. Eine von der Schmelzzone 42 gestreute bzw. zurück geworfene Messstrahlung 212 verläuft abschnittsweise parallel zu der Laserstrahlung 210, passiert den halbdurchlässigen Spiegel 208, ohne eine Richtungsänderung zu erfahren und fällt auf den optischen Sensor 206, dessen Messwerte wiederum der elektronischen, digitalen Auswerteeinheit 50 zur Berechnung der Qualitätskennzahlen bzw. der Qualitätskennzeichen zugeführt werden. Mittels eines Führungssystems 214 lassen sich der Laser 204 bzw. die Messeinrichtung 202 frei in Bezug zum Bett 14 verfahren und hierdurch das Bauteil 12 im Zuge des schichtweise-additiv verlaufenden ALM-Prozesses mit hoher Genauigkeit herstellen. Eine Bearbeitungszelle mit einer zur Vermeidung von Oxidationsprozessen notwendigen Schutzgasatmosphäre ist der besseren zeichnerischen Übersicht halber nicht dargestellt.

Weiterhin können ein Messlaser 216 und ein weiterer optischer Sensor 218 vorgesehen sein. Der Messlaser 216 ist beispielsweise auf eine Sauerstofflinie im optischen Spektrum abgestimmt und gibt demzufolge eine (Mess-)Laserstrahlung 220 mit einer entsprechenden Frequenz ab. Diese Laserstrahlung 220 wird parallel zum Bett 14 durch die hier nicht dargestellte Bearbeitungszelle mit der Schutzgasatmosphäre geleitet und trifft nach Passieren der Schmelzzone 42 auf den entsprechend sensitiv ausgeführten optischen Sensor 218, der die beim Vorhandensein von unerwünschten Sauerstoffmolekülen erfolgende Absorption der Laserstrahlung 220 erfasst und ebenfalls an die Auswerteeinheit 50 weiter meldet.

Das hier schematisch dargestellte vierte Ausführungsbeispiel erlaubt im Vergleich zu den ersten drei Ausführungsformen eine platzsparende Bauweise, da der Laser 204 als Schmelz- und als Messlaser eine Doppelfunktionalität ausübt.

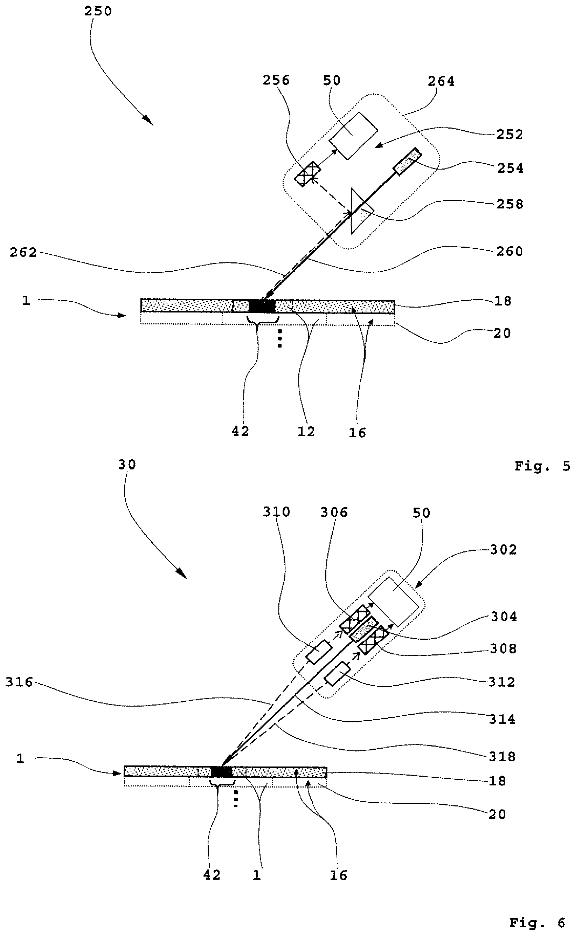

Die **Fig. 5** zeigt ein fünftes, erfindungsgemäßes Ausführungsbeispiel der Vorrichtung, das eine Untervariante des vierten Ausführungsbeispiels verkörpert. Eine Vorrichtung 250 umfasst erneut eine Messeinrichtung 252 mit einem Laser 254, einem optischen Sensor 256, einem halbdurchlässigen Spiegel 258 und einer Auswerteeinheit 50. Mittels einer vom Laser 254 erzeugten Laserstrahlung 260 wird das Materialpulver 16 der obersten der beiden Schichten 18, 20 im Bereich der Schmelzzone 42 verflüssigt. Anschließend erstarrt das Materialpulver 16 in der Schmelzzone 42. Hierdurch wird das herzustellende Bauteil 12 schichtweise-additiv aufgebaut. Der Aufbau des fünften Ausführungsbeispiels korrespondiert mit dem Aufbau des vierten Ausführungsbeispiels der Vorrichtung nach Maßgabe von Fig. 4 mit dem wesentlichen Unterschied, dass die Anordnung von Laser 254 und Sensor 256 in Bezug zum halbdurchlässigen Spiegel 258 vertauscht sind.

Die **Fig. 6** illustriert ein sechstes Ausführungsbeispiel der Vorrichtung. Eine Vorrichtung 300 umfasst im Unterschied zu den vorstehenden Ausführungen eine Messeinrichtung 302 mit einem Laser 304, zwei optischen Sensoren 306, 308 mit jeweils einer vorgelagerter Optik 310, 312 sowie der Auswerteeinheit 50. Die Messeinrichtung 302, die zugleich die Schmelzfunktion innehat, ist mit Hilfe eines nicht dargestellten Führungssystems zumindest parallel zu dem Bett 14 im Raum verfahrbar. Mittels einer vom Laser 304 emittierten Laserstrahlung 314 wird das Materialpulver 16 der obersten der beiden Schichten 18, 20 primär im Bereich der Schmelzzone 42 temporär verflüssigt, um sich anschließend wieder im Zuge des ALM-Prozesses selbsttätig unter Schaffung des Bauteiles 12 zu verfestigen. Von der Schmelzzone 42 gestreute bzw. zurück geworfene Messstrahlung 316, 318 gelangt durch die zugehörigen Optiken 310, 312 auf die jeweils zugeordneten optischen Sensoren 306, 308, deren Messwerte mit Hilfe der Auswerteeinheit 50 zu den Qualitätskennzahlen verarbeitet werden. Im Unterschied zu den vorstehenden Ausführungsbeispielen sind bei der Messeinrichtung 302 exemplarisch zwei optische Sensoren 306, 308 koaxial zum Laser 304 angeordnet, wodurch unter anderem eine weitere Reduzierung des Bauraums möglich ist und das Führungssystem des Lasers 304 mitgenutzt werden kann.

Darüber hinaus kann mittels des ersten Sensors 306 die Temperatur der Schmelzzone 42, z. B. auf dem Wege einer Raman-Spektroskopie der Messstrahlung 316, erfasst werden und mit Hilfe der zweiten Messstrahlung 318 und des zweiten Sensors 308 in Verbindung mit einem geeigneten Messverfahren beispielsweise zugleich auf das Vorhandensein unerwünschter Sauerstoffatome oder anderer Gase in der hier nicht dargestellten Schutzgasatmosphäre innerhalb der Bearbeitungszelle geschlossen werden.

Weiterhin kann eine Messung einer Raman-Linie mittels mindestens eines der beiden Sensoren 306, 308 erfolgen, bevor die Laserstrahlung 314 auf die Schmelzzone 42 auftrifft.

Bei der erfindungsgemäßen ALM-Vorrichtung 10 kann die Qualität des aufgebauten Bauteils 12 zeitgleich und demzufolge zeitsparend zu dem eigentlichen Herstellungsprozess erfasst werden. Bei unzulässigen Abweichungen von vorgegebenen Grenzwerten, wodurch in der Regel eine Unterschreitung der Qualität indiziert ist, kann der ALM-Fertigungsprozess selbsttätig kontrolliert von der Auswerteeinheit 40 unterbrochen werden. Hierdurch kann das Verschwenden von Ressourcen bzw. das Ausbringen einer neuen Schicht mit Materialpulver 16 und ein erneutes Scannen bzw. Messen mittels der optischen Sensoren vermieden werden. Darüber hinaus erlauben die von der Vorrichtung 10 ermittelten Qualitätskennzahlen, die vorzugsweise mit spezifizierten Bauteilkoordinaten korrelieren, eine zuverlässige Abschätzung, ob ein Aufbaufehler als kritisch einzustufen ist oder nicht.

**Bezugszeichenliste**

| | | | |
|---|---|---|---|
| 10. | Vorrichtung | 100. | Vorrichtung (2. Var.) |
| 12. | Bauteil | 102. | Arbeitsbereich |
| 14. | Bett | | |
| 16. | Materialpulver | | |
| 18. | Schicht (Materialpulver) | | |
| 20. | Schicht (Materialpulver) | 150. | Vorrichtung (3. Var.) |
| 22. | Bearbeitungszelle | 152. | vordefinierter Bereich |
| 24. | Schutzgasatmosphäre | | |
| 30. | Messeinrichtung | 200. | Vorrichtung (4. Var.) |
| 32. | Laser | 202. | Messeinrichtung |
| 34. | optischer Sensor | 204. | Laser |
| 36. | Optik | 206. | optischer Sensor |
| 38. | Optik | 208. | halbdurchlässiger Spiegel |
| 40. | Laserstrahlung | 210. | Laserstrahlung |
| 42. | Schmelzzone | 212. | Messstrahlung |
| | | 214. | Führungssystem |
| 46. | Messstrahlung | 216. | Messlaser |
| | | 218. | optischer Sensor |
| 50. | Auswerteeinheit | 220. | (Mess-)Laserstrahlung |
| 52. | Führungssystem (Sensor) | | |
| 54. | Führungssystem (Laser) | | |
| | | 250. | Vorrichtung (5. Var.) |
| | | 252. | Messeinrichtung |
| | | 254. | Laser |
| | | 256. | optischer Sensor |
| | | 258. | halbdurchlässiger Spiegel |
| | | 260. | Laserstrahlung |
| | | 262. | Messstrahlung |
| | | 264. | Führungssystem |
| 300. | Vorrichtung (6. Var.) | | |
| 302. | Messeinrichtung | | |
| 304. | Laser | | |
| 306. | optischer Sensor | | |
| 308. | optischer Sensor | | |
| 310. | Optik | | |
| 312. | Optik | | |
| 314. | Laserstrahlung | | |
| 316. | Messstrahlung | | |
| 318. | Messstrahlung | | |

## Patentansprüche

1. Vorrichtung ( 200, 250) zur schichtweise-additiven Herstellung eines komplexen dreidimensionalen Bauteils (12), mit:
einem Bett (14) mit einem Materialpulver (16);
einer Messeinrichtung (202, 252) zur kontinuierlichen Überwachung von Qualitätskennzahlen während der Herstellung des Bauteils (12) mit mindestens einem Laser (204, 254) zum örtlich begrenzten Aufschmelzen einer obersten Schicht (18) des Materialpulvers (16) in einer Schmelzzone (42) und mindestens einem optischen Sensor (206, 218, 256) zur vorrangigen Erfassung der Qualitätskennzahlen im Bereich der Schmelzzone (42), wobei der optische Sensor (206, 256) in ein Führungssystem (214, 264) des mindestens einen Lasers (204, 254) zur räumlichen Positionierung des Lasers (204, 254) in Bezug zum Bauteil (12) integriert ist, wobei die von dem mindestens einen Laser (204) emittierte Laserstrahlung (210) mittels eines halbdurchlässigen Spiegels (208) auf das Materialpulver (16) der obersten Schicht (18) des Bettes (14) umlenkbar ist und eine vom Materialpulver (16) gestreute Messstrahlung (212) nach dem ablenkungsfreien Durchlaufen des Spiegels (208) dem mindestens einen optischen Sensor (206) zuführbar ist; und
einer mit einer Schutzgasatmosphäre (24) befüllten Bearbeitungszelle (22), welche die Messeinrichtung (30, 202, 252) und das Bett (14) zumindest bereichsweise umgibt.

2. Vorrichtung (200, 250) zur schichtweise-additiven Herstellung eines komplexen dreidimensionalen Bauteils (12), mit:
einem Bett (14) mit einem Materialpulver (16);
einer Messeinrichtung (202, 252) zur kontinuierlichen Überwachung von Qualitätskennzahlen während der Herstellung des Bauteils (12) mit mindestens einem Laser (204, 254) zum örtlich begrenzten Aufschmelzen einer obersten Schicht (18) des Materialpulvers (16) in einer Schmelzzone (42) und mindestens einem optischen Sensor (206, 218, 256) zur vorrangigen Erfassung der Qualitätskennzahlen im Bereich der Schmelzzone (42), wobei der optische Sensor (206, 256) in ein Führungssystem (214, 264) des mindestens einen Lasers (204, 254) zur räumlichen Positionierung des Lasers (204, 254) in Bezug zum Bauteil (12) integriert ist, wobei die von dem mindestens einen Laser (254) emittierte Laserstrahlung (260) einen halbdurchlässigen Spiegel (258) ablenkungsfrei durchläuft und eine vom Materialpulver (16) der obersten Schicht (18) des Bettes (12) gestreute Messstrahlung (262) nach einer Umlenkung mittels des Spiegels (258) dem mindestens einen optischen Sensor (256) zuführbar ist; und
einer mit einer Schutzgasatmosphäre (24) befüllten Bearbeitungszelle (22), welche die Messeinrichtung (202, 252) und
das Bett (14) zumindest bereichsweise umgibt.

3. Vorrichtung (10) nach Patentanspruch 1 oder 2, **dadurch gekennzeichnet, dass** dem Laser und/oder dem optischen Sensor jeweils eine Optik zugeordnet ist.

4. Vorrichtung ( 200, 250) nach einem der voranstehenden Patentansprüche, **dadurch gekennzeichnet, dass** der Messeinrichtung (202, 252) eine elektronische Auswerteeinheit (50) zugeordnet ist.

5. Vorrichtung ( 200, 250) nach einem der voranstehenden Patentansprüche, **dadurch gekennzeichnet, dass** mittels des mindestens einen optischen Sensors (206, 218, 256,) eine räumliche Lage der Schmelzzone (42) in Relation zu dem Bauteil (12) und/oder eine Temperatur im Bereich der Schmelzzone (42) berührungslos erfassbar ist.

6. Vorrichtung ( 200, 250) nach Patentanspruch 5, **dadurch gekennzeichnet, dass** die Temperatur im Bereich der Schmelzzone (42) durch die Erfassung einer Infrarot-Strahlungsmenge oder einer Rotations-Raman-Strahlung mittels des mindestens einen Sensors (206, 218, 256) erfassbar ist.

7. Vorrichtung (200) nach einem der voranstehenden Patentansprüche, **dadurch gekennzeichnet, dass** mittels mindestens eines Sensors (218) und eines Messlasers (216) Sauerstoff und/oder andere Gase innerhalb der Schutzgasatmosphäre (24) durch eine Infrarot-Linien-Absorption oder eine Raman-Verschiebung erfassbar sind.

8. Vorrichtung ( 250) nach einem der voranstehenden Patentansprüche, **dadurch gekennzeichnet, dass** mittels des mindestens einen Sensors (206, 256) und des mindestens einen Lasers (204, 254) Sauerstoff und/oder andere Gase in der Schutzgasatmosphäre (24) anhand einer Farbe und/oder einer Intensität der am Materialpulver (16) gestreuten Messstrahlung (212, 262) erfassbar sind.

9. Vorrichtung ( 200, 250) nach einem der voranstehenden Patentansprüche, **dadurch gekennzeichnet, dass** mittels der Auswerteeinheit (50) die Qualitätskennzahlen, insbesondere eine Oxidation des Bauteils (12) und ein Kristallinitätsgrad in der Schmelzzone (42), ermittelbar sind.

## Claims

1. Apparatus (200, 250) for layer-wise additive manufacturing of a complex three-dimensional component (12), comprising:
a bed (14) with a material powder (16);
a measurement device (202, 252) for continuously monitoring quality indicators during the manufacture of the component (12) with at least one laser (204, 254) for the locally delimited melting of a topmost layer (18) of the material powder (16) in a melting zone (42) and at least one optical sensor (206, 218, 256) for the primary capturing of the quality indicators in the region of the melting zone (42), wherein the optical sensor (206, 256) is integrated in a guidance system (214, 264) of the at least one laser (204, 254) for spatially positioning the laser (204, 254) in relation to the component (12), wherein the laser radiation (210) emitted by the at least one laser (204) is deflectable onto the material powder (16) of the topmost layer (18) of the bed (14) using a semi-transparent mirror (208) and measurement radiation (212) scattered by the material powder (16) is feedable to the at least one optical sensor (206) after the deflection-free passage through the mirror (208); and
a processing cell (22) which is filled with an inert gas atmosphere (24) and at least partially surrounds the measurement device (30, 202, 252) and the bed (14).

2. Apparatus (200, 250) for layer-wise additive manufacturing of a complex three-dimensional component (12), comprising:
a bed (14) with a material powder (16);
a measurement device (202, 252) for continuously monitoring quality indicators during the manufacture of the component (12) with at least one laser (204, 254) for the locally delimited melting of a topmost layer (18) of the material powder (16) in a melting zone (42) and at least one optical sensor (206, 218, 256) for the primary capturing of the quality indicators in the region of the melting zone (42), wherein the optical sensor (206, 256) is integrated in a guidance system (214, 264) of the at least one laser (204, 254) for spatially positioning the laser (204, 254) in relation to the component (12), wherein the laser radiation (260) emitted by the at least one laser (254) passes without deflection through a semi-transparent mirror (258) and measurement radiation (262) scattered by the material powder (16) of the topmost layer (18) of the bed (12) is feedable to the at least one optical sensor (256) after a deflection using the mirror (258); and
a processing cell (22) which is filled with an inert gas atmosphere (24) and at least partially surrounds the measurement device (202, 252) and the bed (14).

3. Apparatus (10) according to Claim 1 or 2, **characterized in that** the laser and/or the optical sensor are each assigned an optical unit.

4. Apparatus (200, 250) according to any of the preceding claims, **characterized in that** the measurement device (202, 252) is assigned an electronic evaluation unit (50).

5. Apparatus (200, 250) according to any of the preceding claims, **characterized in that** the at least one optical sensor (206, 218, 256) is used to contactlessly capture a spatial position of the melting zone (42) in relation to the component (12) and/or a temperature in the region of the melting zone (42).

6. Apparatus (200, 250) according to Claim 5, **characterized in that** the temperature in the region of the melting zone (42) is capturable by capturing an amount of infrared radiation or rotational Raman radiation using the at least one sensor (206, 218, 256).

7. Apparatus (200) according to any of the preceding claims, **characterized in that** oxygen and/or other gases within the inert gas atmosphere (24) are capturable by way of infrared line absorption or a Raman shift using at least one sensor (218) and a measurement laser (216).

8. Apparatus (250) according to any of the preceding claims, **characterized in that** oxygen and/or other gases in the inert gas atmosphere (24) are capturable using the at least one sensor (206, 256) and the at least one laser (204, 254) on the basis of a colour and/or an intensity of the measurement radiation (212, 262) scattered at the material powder (16).

9. Apparatus (200, 250) according to any of the preceding claims, **characterized in that** the quality indicators, in particular an oxidation of the component (12) and a degree of crystallinity in the melting zone (42), are ascertainable using the evaluation unit (50).

## Revendications

1. Dispositif (200, 250) destiné à la fabrication additive par couches d'un composant tridimensionnel complexe (12), ledit dispositif comprenant :
un lit (14) pourvu d'une poudre de matériau (16) ;
un module de mesure (202, 252) destiné à surveiller en continu des indicateurs de qualité pendant la fabrication du composant (12) à l'aide d'au moins un laser (204, 254) destiné à faire fondre, de manière limitée localement, une couche supérieure (18) de la poudre de matériau (16) dans une zone de fusion (42) et au moins un capteur optique (206, 218, 256) destiné à détecter principalement les indicateurs de qualité au niveau de la zone de la zone de fusion (42), le capteur optique (206, 256) étant intégré dans un système de guidage (214, 264) de l'au moins un laser (204, 254) afin de positionner spatialement le laser (204, 254) par rapport au composant (12), le rayonnement laser (210) émis par l'au moins un laser (204) pouvant être dévié vers la poudre de matériau (16) de la couche supérieure (18) du lit (14) au moyen d'un miroir semi-transparent (208 ), et un rayonnement de mesure (212), diffusé par la poudre de matériau (16), pouvant être amené à l'au moins un capteur optique (206) après avoir traversé le miroir (208) sans être dévié ; et
une cellule de traitement (22) qui est remplie d'une atmosphère de gaz protecteur (24) et qui entoure au moins par zones le module de mesure (30, 202, 252) et le lit (14).

2. Dispositif (200, 250) destiné à la fabrication additive par couches d'un composant tridimensionnel complexe (12), ledit dispositif comprenant :
un lit (14) pourvu d'une poudre de matériau (16) ;
un module de mesure (202, 252) destiné à surveiller en continu des indicateurs de qualité pendant la fabrication du composant (12) à l'aide d'au moins un laser (204, 254) destiné à faire fondre de manière limitée localement une couche supérieure (18) de la poudre de matériau (16) dans un zone de fusion (42) et au moins un capteur optique (206, 218, 256) destiné à détecter principalement les indicateurs de qualité au niveau de la zone de fusion (42), le capteur optique (206, 256) étant intégré dans un système de guidage (214, 264) de l'au moins un laser (204, 254) afin de positionner spatialement le laser (204, 254) par rapport au composant (12), le rayonnement laser (260) émis par l'au moins un laser (254) traversant un miroir semi-transparent (258) sans être dévié et un rayonnement de mesure (262), diffusé par la poudre de matériau (16) de la couche supérieure (18) du lit (12), pouvant être amené à l'au moins un capteur optique (256) après avoir été dévié par le miroir (258) ; et
une cellule de traitement (22) qui est remplie d'une atmosphère de gaz protecteur (24) et qui entoure au moins par zones le module de mesure (202, 252) et le lit (14).

3. Dispositif (10) selon la revendication 1 ou 2, **caractérisé en ce que** le laser et/ou le capteur optique sont chacun associés à une optique.

4. Dispositif (200, 250) selon l'une des revendications précédentes, **caractérisé en ce que** le module de mesure (202, 252) est associé à une unité d'évaluation électronique (50).

5. Dispositif (200, 250) selon l'une des revendications précédentes, **caractérisé en ce qu'**une position spatiale de la zone de fusion (42) par rapport au composant (12) et/ou une température au niveau de la zone de fusion (42) peuvent être détectés sans contact au moyen de l'au moins un capteur optique (206, 218, 256) .

6. Dispositif (200, 250) selon la revendication 5, **caractérisé en ce que** la température au niveau de la zone de fusion (42) peut être détectée par détection d'une quantité de rayonnement infrarouge ou d'un rayonnement Raman de rotation au moyen de l'au moins un capteur (206, 218, 256).

7. Dispositif (200) selon l'une des revendications précédentes, **caractérisé en ce que** l'oxygène et/ou d'autres gaz situés à l'intérieur de l'atmosphère de gaz protecteur (24) peuvent être détectés au moyen d'au moins un capteur (218) et d'un laser de mesure (216) par le biais d'une absorption de ligne infrarouge ou d'un décalage de Raman.

8. Dispositif (250) selon l'une des revendications précédentes, **caractérisé en ce que** l'oxygène et/ou d'autres gaz situés dans l'atmosphère de gaz protecteur (24) peuvent être détectés sur la base d'une couleur et/ou d'une intensité du rayonnement de mesure (212, 262) diffusé sur le matériau en poudre (16) au moyen de l'au moins un capteur (206, 256) et de l'au moins un laser (204, 254).

9. Dispositif (200, 250) selon l'une des revendications précédentes, **caractérisé en ce que** les indicateurs de qualité, notamment une oxydation du composant (12) et un degré de cristallinité dans la zone de fusion (42), peuvent être déterminés au moyen de l'unité d'évaluation (50).
